# EUROPEAN PATENT APPLICATION

(11) **EP 4 250 545 A1**
(43) Date of publication of application: **27.09.2023**
(21) Application number: 21896476.5
(22) Date of filing: 10.09.2021
(51) Int. Cl.: H02M 1/10, H02M 3/335, H02M 7/537

(54) **POWER CONVERTER**

(30) Priority: 30.11.2020 CN 202022824261 U
(71) Applicant: Huawei Technologies Co., Ltd., Shenzhen, Guangdong 518129 (CN)
(72) Inventor: PAN, Liwen, Shenzhen, Guangdong 518129 (CN); FENG, Hui, Shenzhen, Guangdong 518129 (CN); WANG, Deyuan, Shenzhen, Guangdong 518129 (CN)
(74) Representative: Huawei European IPR
(86) International application number: PCT/CN2021/117707
(87) International publication number: WO 2022/110972

(57) **Abstract**

This application provides a power converter, which relates to the field of automobiles and may be applied to various electric vehicles. The power converter includes one input interface, a plurality of power modules, and a plurality of output interfaces. The plurality of power modules include a high-voltage bidirectional direct current module, a low-voltage direct current module, a bidirectional alternating current module, and an industrial electrical power module. Input ends of the plurality of power modules are all electrically connected to the input interface, and the input interface is electrically connected to a battery pack of the vehicle. Output ends of the plurality of power modules are independent of each other, the output ends of the plurality of power modules are electrically connected to the plurality of output interfaces in a one-to-one correspondence, and the output interfaces are electrically connected to a power device or a charging device other than the vehicle. The power converter provided in embodiments of this application can have functions of various power modules, and can provide or obtain various types of electrical energy, thereby extending a wider application scope, and facilitating charging and power supply.

## Description

This application claims priority to Chinese Patent Application No. 202022824261.9, filed with the China National Intellectual Property Administration on November 30, 2020 and entitled "POWER CONVERTER", which is incorporated herein by reference in its entirety.

### TECHNICAL FIELD

This application relates to the field of automobiles, and more specifically, to a power converter.

### BACKGROUND

With development and large-scale use of new energy vehicles, a power converter technology applied to the new energy vehicles has become one of the key technologies to promote application of the new energy vehicles. Currently, power converters of electric vehicles are mainly classified into a bidirectional alternating current (alternating current, AC) on-board charger (on-board charger, OBC), a high-voltage direct current (direct current, DC) fast charging module, a low-voltage direct current power supply module, and the like. However, in an existing solution, each power converter includes only one type of power module, and a same vehicle is usually equipped with only one power converter. Therefore, a same electric vehicle usually can receive or provide only one type of electrical energy. For example, when an electric vehicle A that supports only a 220 V alternating current needs to be charged, only a charging pile connected to a power grid or another electric vehicle that can provide a 220 V alternating current and that has a charging function can be searched for. It is further assumed that, in this case, the electric vehicle passes a charging pile that can provide a 100 V direct current, but cannot be charged because the electric vehicle does not support a 100 V direct current. For another example, it is assumed that an electric vehicle may be used as a mobile charging pile, that is, may charge another electric vehicle. However, because the electric vehicle can support only a low-voltage direct current, even if an electric vehicle that needs to be charged appears, the electric vehicle cannot provide electrical energy for the electric vehicle that needs to be charged. In short, an application scope of the power converter in the existing solution is excessively narrow. As a result, the electric vehicle cannot be charged or power cannot be supplied in a convenient and timely manner.

Therefore, how to extend the application scope of the power converter is a technical problem to be urgently resolved.

### SUMMARY

This application provides a power converter for extending an application scope of the power converter.

According to a first aspect, a power converter is provided, including: one input interface, a plurality of power modules, and a plurality of output interfaces. The plurality of power modules include a high-voltage bidirectional direct current module, a low-voltage direct current module, a bidirectional alternating current module, and an industrial electrical power module. Input ends of the plurality of power modules are all electrically connected to the input interface, and the input interface is electrically connected to a battery pack of a vehicle. Output ends of the plurality of power modules are independent of each other, the output ends of the plurality of power modules are electrically connected to the plurality of output interfaces in a one-to-one correspondence, and the output interfaces are electrically connected to a power device or a charging device other than the vehicle.

In the technical solution of this application, the power converter can have functions of various power modules, and can provide or obtain various types of electrical energy, thereby extending a wider application scope, and facilitating charging and power supply.

When power is supplied, electrical energy flows out from the battery pack, flows into the power converter from a charging input end connected to the battery pack, and flows out of the power converter from one or more output ends. When charging is performed, electrical energy may flow into the power converter from an output end, then flow out of the power converter from an input end, and flow into the battery pack.

That is, the input interface may alternatively be used as the output interface, and the output interface may alternatively be used as the input interface. The input and output are defined relative to the power converter. When the input interface is used as the output interface, the input interface may alternatively be referred to as the output interface; or when the output interface is used as the input interface, the output interface may alternatively be referred to as the input interface.

In an example, the high-voltage direct current module may implement an input voltage ranging from 200 V to 500 V and an output voltage ranging from 200 V to 1000 V That is, a voltage range of an input high-voltage direct current that can be supported by the input end may be 200 V to 500 V, and may include or may not include a boundary value; and a voltage of an output high-voltage direct current that can be supported by the output end may be 200 V to 1000 V, and may also include or may not include a boundary value.

It should be understood that, because the plurality of power modules are connected to each other and share one input interface, the input voltage range may be applicable to all power modules, but not only applicable to the high-voltage direct current module.

With reference to the first aspect, in some implementations of the first aspect, the input interface supports a direct current with an input voltage ranging from 200 V to 500 V

With reference to the first aspect, in some implementations of the first aspect, an output interface corresponding to an output end of the high-voltage direct current module supports a direct current with an output voltage ranging from 200 V to 1000 V

An input end of the low-voltage direct current module is connected to the battery pack through the input interface connected to the input end of the low-voltage direct current module, and an output end of the low-voltage direct current module is connected, through an output interface corresponding to the output end of the low-voltage direct current module, to another on-board device or system that needs to be driven by using a low-voltage direct current, for example, a light device, an air conditioning device, or a control device in a vehicle. For another example, the low-voltage direct current module also provides electrical energy for a controller. However, it should be understood that, the electrical energy herein may be provided for the controller through the output interface, but not through a third-type interface. In other words, a signal is transmitted between the third-type interface and the controller. The output interface is a second-type interface, and the output interface may provide an operating voltage or an operating current for the controller.

Optionally, the low-voltage direct current may include, for example, common 48 V, 24 V, 12 V, 5 V, and the like. However, it should be understood that a circuit of the low-voltage direct current module 120 may be designed according to an actual requirement, and may include only one type of voltage output, or may include a plurality of types of voltage outputs. When the plurality of types of voltage outputs are included, the low-voltage direct current module 120 may include a plurality of output ends, and one output end may be set for each voltage value.

However, it should be understood that the plurality of output ends may be set for each voltage value. A difference lies only in that the output ends for each voltage value are equivalent, and the output ends for different voltage values are independent of each other.

With reference to the first aspect, in some implementations of the first aspect, an output interface corresponding to an output end of the low-voltage direct current module supports an output of at least one type of the following electrical energy: a 48 V direct current and a 12 V direct current.

With reference to the first aspect, in some implementations of the first aspect, the low-voltage direct current module further includes a low-voltage direct current buck circuit, and the 12 V direct current is obtained by using the low-voltage direct current buck circuit to perform voltage step-down on a 48 V voltage.

The bidirectional alternating current module may perform electrical energy interaction with a power grid, including obtaining electrical energy from the power grid and feeding electrical energy to the power grid. That is, during power supply, electrical energy in the battery pack may flow into the bidirectional alternating current module through the input interface, and after converting the electrical energy into a corresponding alternating current, the bidirectional alternating current module outputs the alternating current through the output interface corresponding to the output end. For example, a 220 V alternating current may be output. During charging, the 220 V alternating current in the power grid flows into the bidirectional alternating current module through the output interface corresponding to the output end of the bidirectional alternating current module. After the bidirectional alternating current module converts the alternating current into a direct current, the direct current flows into the battery pack through the input interface connected to an input end.

With reference to the first aspect, in some implementations of the first aspect, an output interface corresponding to the output end of the bidirectional alternating current module supports an output of a 220 V alternating current.

With reference to the first aspect, in some implementations of the first aspect, an output interface corresponding to an output end of the industrial electrical power module supports an output of a 380 V alternating current.

Optionally, the power converter may further include a motor driver module. The motor driver module may convert the electrical energy in the battery pack into corresponding motor kinetic energy according to a motor driver current requirement. In other words, during power supply, the electrical energy in the battery pack may flow in from an input end of the motor driver module connected to the input interface. The motor driver module converts the flowed electrical energy into an alternating current that can support the motor to work, and outputs the alternating current to the motor through an output interface corresponding to an output end, to drive the motor to run.

It should be noted that, in some cases, the motor driver module may be independent. In this case, the power converter includes a module, and the module may be used to generate the electrical energy for driving the motor. In some other cases, the motor driver module may alternatively be an example of the industrial electrical power module during power supply. That is, when supplying power, the industrial electrical power module may be configured to provide the electrical energy for the motor. In this case, the industrial electrical power module provides a function of the motor driver module. In short, the motor driver module may be used as an independent power supply module, or may be used as a sub-module of the industrial electrical power module. During power supply, the industrial electrical power module may provide electrical energy for a motor driver apparatus of a vehicle in which the industrial electrical power module is located, or may charge another vehicle. However, during charging, the industrial electrical power module obtains industrial electrical power from another place. Therefore, it can be clearly learned that the power supply and the charging are independent of each other.

It should be further understood that, when the motor driver module is an independent module, a function of the industrial electrical power module is not affected, and the industrial electrical power module may still perform both charging and power supply, but the motor driver module may only perform power supply. In other words, the independent motor driver module can only be configured to provide the electrical energy for driving the motor to run, and cannot be configured to charge the battery pack.

With reference to the first aspect, in some implementations of the first aspect, an output interface corresponding to an output end of the industrial electrical power module supports an output of an alternating current used to drive the motor to run.

With reference to the first aspect, in some implementations of the first aspect, the power converter further includes a motor driver module, and an output interface corresponding to an output end of the motor driver module supports an output of an alternating current used to drive a motor to run.

Optionally, when the high-voltage direct current module is working, output power may be controlled by controlling a quantity of working DC/DC converters.

With reference to the first aspect, in some implementations of the first aspect, the high-voltage direct current module includes a plurality of isolated direct current/direct current DC/DC converters, the plurality of isolated DC/DC converters are connected in a cascading manner between an input end of the high-voltage direct current module and an output end of the high-voltage direct current module, and a quantity of isolated DC/DC converters powered on in a same time corresponds to a voltage value output by the output end of the high-voltage direct current module.

With reference to the first aspect, in some implementations of the first aspect, a quantity of coil turns of a primary winding and a quantity of coil turns of a secondary winding that are of a transformer in the plurality of isolated DC/DC converters are equal.

It should be noted that, in this embodiment of this application, turn ratios of the primary winding and the secondary winding that are of the transformer may be set to the same (that is, the turn ratio is 1:1) or may be set to different (that is, the turn ratio is not 1:1), and a voltage change in the set turn ratio can be clearly calculated. However, if the turn ratio is set to 1:1, that is, the primary winding and the secondary windings are symmetrically arranged, consistency of transformer manufacturing is better ensured, and calculation is easy to be performed.

Optionally, the bidirectional alternating current module and the low-voltage direct current module may be integrated together, for example, may be implemented through a three-port converter.

With reference to the first aspect, in some implementations of the first aspect, a circuit for implementing a function of the bidirectional alternating current module and a circuit for implementing a function of the low-voltage direct current module are integrated together through a three-port converter to form a bidirectional alternating current and low-voltage direct current integration module. The three-port converter includes one primary winding and two secondary windings, the primary winding is connected to the input end, one of the two secondary windings is connected to the circuit that is for implementing the function of the bidirectional alternating current module and that is in the integration module, and the other of the two secondary windings is connected to the circuit that is for implementing the function of the low-voltage direct current module and that is in the integration module.

With reference to the first aspect, in some implementations of the first aspect, that the output interfaces are electrically connected to a power device or a charging device other than the vehicle includes:
any one or more of the plurality of output interfaces are electrically connected to the charging device; or
any one of the output interface corresponding to the output end of the high-voltage direct current module, the output interface corresponding to the output end of the bidirectional alternating current module, or the output interface corresponding to the output end of the industrial electrical power module is electrically connected to the charging device.

### BRIEF DESCRIPTION OF DRAWINGS

FIG. 1 is a schematic structural diagram of a power converter according to an embodiment of this application;
FIG. 2 is a schematic circuit diagram of an internal module of a power converter according to an embodiment of this application;
FIG. 3 is a schematic circuit diagram of a high-voltage direct current module according to an embodiment of this application; and
FIG. 4 is a schematic circuit diagram of a part of a power module according to an embodiment of this application.

### DESCRIPTION OF EMBODIMENTS

The following describes technical solutions of this application with reference to accompanying drawings.

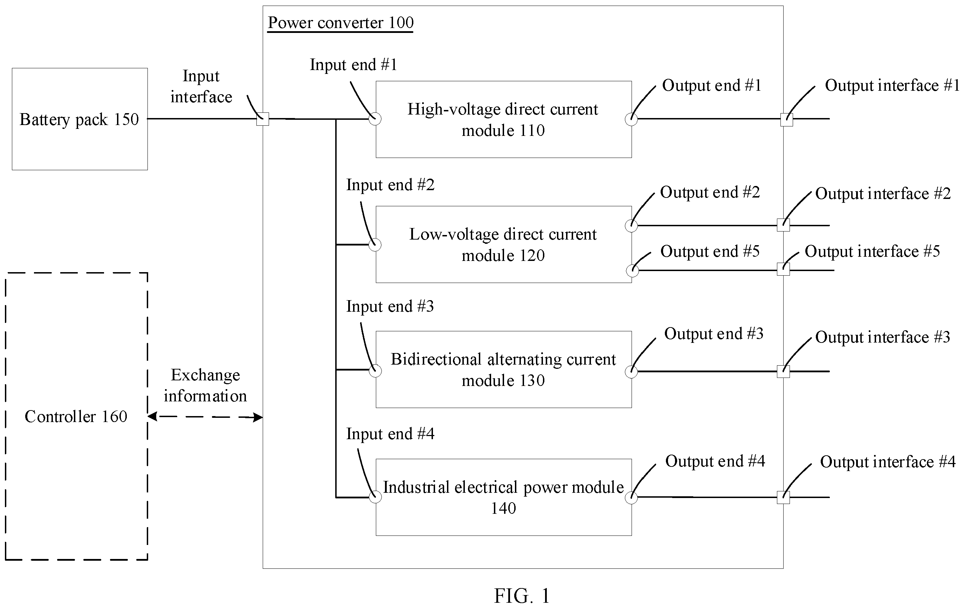

FIG. 1 is a schematic structural diagram of a power converter according to an embodiment of this application. As shown in FIG. 1, the power converter 100 may include an input interface, a plurality of power modules, and a plurality of output interfaces. The plurality of power modules may include a high-voltage direct current module 110, a low-voltage direct current module 120, a bidirectional alternating current module 130, and an industrial electrical power module 140, and may further include a motor driver module. Each power module may include an output end, the output ends are electrically connected to the plurality of output interfaces in a one-to-one correspondence, the output interfaces are configured to output electrical energy from the power converter 100, all modules share one input end, and the input interface is configured to input electrical energy to the power converter 100. Input ends of the plurality of power modules are all electrically connected to the input interface of the power converter.

It should be noted that, to distinguish between the ends (including an input end and an output end) of the power module and the interfaces (including an input interface and an output interface) of the power converter, in FIG. 1, the end of the power module is indicated by a hollow small circle, and the interface of the power converter is indicated by a hollow small square.

Optionally, as shown in FIG. 1, input ends of the high-voltage direct current module 110, the low-voltage direct current module 120, the bidirectional alternating current module 130, and the industrial electrical power module 140 are respectively an input end #1 to an input end #4, and the input ends are all connected to the input interface.

Optionally, as shown in FIG. 1, output ends of the high-voltage direct current module 110, the low-voltage direct current module 120, the bidirectional alternating current module 130, and the industrial electrical power module 140 each include an output end #1 to an output end #4, and the output ends are all connected to an output interface #1 to an output interface #4 in a one-to-one correspondence.

Optionally, the low-voltage direct current module 120 further includes an output end #5, and the output end #5 is connected to an output interface #5.

Optionally, the power converter 100 may be electrically connected to a controller 160 through a signal transmission interface. The controller 160 may be an apparatus disposed in a vehicle for performing data or signal processing. The controller 160 may exchange information with the power converter 100. The controller 160 may generate some instructions for controlling working of the power converter 100, for example, may be configured to control start and stop of the power converter 100, and may be further configured to control an operation of the power converter 100 during high-voltage direct current power supply or charging, and the like. However, it should be understood that, using the controller 160 to control the power converter 100 to work is only an example. It may alternatively be set that the power converter 100 may control working by the power converter itself, for example, generate an electrical path by itself according to a connection status of an input end and an output end for power supply or charging.

However, it should be understood that the controller 160 is not a component of the power converter in this application, and is not a device that must be connected to the power converter in this application.

Optionally, the power converter 100 may be electrically connected to a battery pack 150 through the input interface. The battery pack 150 may be an apparatus disposed in a vehicle for storing electrical energy. The battery pack 150 may include a common battery, for example, a lithium battery or an electrolytic battery. A power source in the battery may be any one of photovoltaic, wind power, or fuel of new energy. The battery pack may also include a plurality of batteries. However, it should be understood that a quantity of batteries in the battery pack 150 is not limited in this application. In other words, the battery pack 150 may include one or more batteries.

Optionally, the power converter 100 may be electrically connected to a charging device or a power device through an output interface, and the power converter 100 exchanges electrical energy with the charging device or the power device through the plurality of output interfaces.

When power is supplied, the electrical energy flows out from the battery pack 150, flows into the power converter 100 from a charging input end connected to the battery pack 150, and flows out of the power converter 100 from one or more output ends. When charging is performed, the electrical energy may flow into the power converter 100 from an output end, then flow out of the power converter 100 from an input end, and flow into the battery pack 150.

That is, the input interface may alternatively be used as the output interface, and the output interface may alternatively be used as the input interface. The input and output are defined relative to the power converter 100. When the input interface is used as the output interface, the input interface may alternatively be referred to as the output interface; or when the output interface is used as the input interface, the output interface may alternatively be referred to as the input interface. In other words, the power converter 100 has a plurality of interfaces, where one interface is an interface shared by different modules (corresponding to the input interface described above). In other words, the input ends of all power modules are connected to the input interface. As shown in FIG. 1, the "input interface" connected to the battery pack on a left side may be referred to as a first type interface. Other different modules have independent interfaces (corresponding to the plurality of output interfaces described above), for example, each of "output interface #1" to "output interface #5" shown on a right side of FIG. 1 may be referred to as a second type interface. A current may flow in from the first type interface to the second type interface, or may flow in from the second type interface to the first type interface. When the current flows from the first type interface to the second type interface, a plurality of second type interfaces may be supported to simultaneously output electrical energy; and when the current flows from the second type interface to the first type interface, the electrical energy can only be input from one interface (that is, any interface) of the plurality of second type interfaces.

Optionally, the high-voltage direct current module 110, the low-voltage direct current module 120, the bidirectional alternating current module 130, and the industrial electrical power module 140 are connected in parallel, an input end of each module is connected to the input interface, and an output end of each module is connected to the output interface. In other words, each module includes at least one output end. For example, as shown in FIG. 1, the high-voltage direct current module 110 includes the output end #1, the low-voltage direct current module 120 includes the output end #2 and the output end #5, the bidirectional alternating current module 130 includes the output end #3, and the industrial electrical power module 140 includes the output end #4.

It should be understood that, when there is a great demand for a specific voltage, a plurality of output ends may also be set for one module, the plurality of output ends in the same module are equivalent to each other, and may be simultaneously applicable during power supply, or may be selected for use during charging. For example, it is assumed that a 12 V (volt, V) low-voltage direct current is required in many modules on the vehicle, a plurality of 12 V output ends may be disposed. When power is supplied, the plurality of 12 V output ends may simultaneously output 12 V direct currents. When charging is performed, an output interface corresponding to any one of the plurality of 12 V output ends is selected to input the 12 V direct current.

The high-voltage direct current module 110 may be understood as a module that can provide a relatively high-voltage direct current in a vehicle. The high-voltage direct current module 110 may be connected to an input interface through an input end, and then electrically connected to the battery pack 150 through the input interface. The high-voltage direct current module 110 is configured to obtain a direct current from the battery pack (corresponding to that during power supply) or transmit a high-voltage direct current to the battery pack 150 (corresponding to that during charging).

That is, the high-voltage direct current module 110 may be configured to supply power and charge. Therefore, it may be considered that the high-voltage direct current module 110 may be used as both a high-voltage direct current charging module and a high-voltage direct current power supply module.

Optionally, the high-voltage direct current module 110 may include an output end. The output end may be connected, through a corresponding output interface (for example, the output interface #1 shown in FIG. 1), to another module that needs to supply power, or may be connected, through a corresponding output interface (for example, the output interface #1 shown in FIG. 1), to an output end of a high-voltage direct current module of another electric vehicle, to charge the another electric vehicle.

In an example, the high-voltage direct current module 110 may implement an input voltage ranging from 200 V to 500 V and an output voltage ranging from 200 V to 1000 V That is, a voltage range of an input high-voltage direct current that can be supported by the input end may be 200 V to 500 V, and may include or may not include a boundary value; and a voltage of an output high-voltage direct current that can be supported by the output end may be 200 V to 1000 V, and may also include or may not include a boundary value.

It should be understood that, because the plurality of power modules are connected to each other and share one input interface, the input voltage range may be applicable to all power modules, but not only applicable to the high-voltage direct current module.

Optionally, the high-voltage direct current module 110 may include a plurality of isolated direct current/direct current (direct current/direct current, DC/DC) converters, that is, each isolated direct current/direct current converter inputs a direct current at one end, and outputs a direct current at the other end, but the input direct current and the output direct current may have the same voltage or different voltages.

Optionally, the isolated direct current/direct current converter may include a dual active full-bridge (dual active full-bridge, DAB) circuit, an LLC resonant circuit, and a phase-shifted full-bridge circuit.

DC/DC can also be written as DCDC or DC-DC, and their meanings are the same. Therefore, the isolated direct current/direct current converter may also have other names, for example, may be referred to as a dual active full-bridge isolated DCDC converter, a dual active full-bridge isolated DC-DC converter, an isolated DCDC converter or an isolated DC-DC converter, which is not listed one by one.

It should be further noted that L in the LLC indicates an inductor and C indicates a capacitor. Therefore, the LLC resonant circuit is an oscillation circuit including two inductors and one capacitor, which is a common expression in all circuit fields. A phase-shifted full-bridge circuit may implement a phase change, and any full-bridge circuit that can implement a phase-shift function may be applied, which is not limited thereto.

An input end of the low-voltage direct current module 120 is connected to the battery pack 150 through the input interface connected to the input end of the low-voltage direct current module 120, and an output end of the low-voltage direct current module is connected, through an output interface corresponding to the output end of the low-voltage direct current module, to another on-board device or system that needs to be driven by using a low-voltage direct current, for example, a light device, an air conditioning device, or a control device in a vehicle. For another example, the low-voltage direct current module also provides electrical energy for the controller 160. However, it should be understood that, the electrical energy herein may be provided for the controller 160 through the output interface, but not through a third-type interface. In other words, a signal is transmitted between the third-type interface and the controller 160, the output interface is the second-type interface, and the output interface may provide an operating voltage or an operating current for the controller 160.

Optionally, the low-voltage direct current may include, for example, common 48 V, 24 V, 12 V, 5 V, and the like. However, it should be understood that a circuit of the low-voltage direct current module 120 may be designed according to an actual requirement, and may include only one type of voltage output, or may include a plurality of types of voltage outputs. When the plurality of types of voltage outputs are included, the low-voltage direct current module 120 may include a plurality of output ends, and one output end may be set for each voltage value.

However, it should be understood that the plurality of output ends may be set for each voltage value. A difference lies only in that the output ends for each voltage value are equivalent, and the output ends for different voltage values are independent of each other.

It should be further noted that, the foregoing is mainly described: During power supply, the electrical energy in the battery pack 150 may flow into the low-voltage direct current module 120 through the input interface. After converting the electrical energy into the corresponding low-voltage direct current, the low-voltage direct current module 120 outputs the low-voltage direct current through the output interface (for example, the output interface #2 and/or the output interface #5 shown in FIG. 1) corresponding to the output end of each voltage value. However, during charging, the electrical energy may also flow in from an output interface (for example, the output interface #2 or the output interface #5 shown in FIG. 1) corresponding to any output end of the low-voltage direct current module 120, and flow in from the input interface to the battery pack 150 after conversion is performed. However, because the electric vehicle needs a relatively large amount of electrical energy, charging by using the low-voltage direct current is very slow. Therefore, although this is a charging solution that can be implemented, the electric vehicle is generally not charged in this manner in practice.

That is, the low-voltage direct current module 120 may be configured to supply power and charge. Therefore, it may be considered that the low-voltage direct current module 120 may be used as both a low-voltage direct current charging module and a low-voltage direct current power supply module. However, because the low-voltage charging is too slow, the charging function is not commonly used, and the low-voltage direct current module is mainly used as the low-voltage direct current power supply module.

The bidirectional alternating current module 130 may perform electrical energy interaction with a power grid, including obtaining electrical energy from the power grid and feeding electrical energy to the power grid. That is, during power supply, the electrical energy in the battery pack 150 may flow into the bidirectional alternating current module 130 through the input interface, and after converting the electrical energy into a corresponding alternating current, the bidirectional alternating current module 130 outputs the alternating current through the output interface (for example, the output interface #3 shown in FIG. 1) corresponding to the output end. For example, a 220 V alternating current may be output. During charging, the 220 V alternating current in the power grid flows into the bidirectional alternating current module 130 through the output interface (for example, the output interface #3 shown in FIG. 1) corresponding to the output end of the bidirectional alternating current module 130. After the bidirectional alternating current module 130 converts the alternating current into a direct current, the direct current flows into the battery pack 150 through the input interface connected to an input end.

The bidirectional alternating current module 130 may be a bidirectional on-board charger (on-board charger, OBC). The bidirectional alternating current module 130 can exchange electrical energy with the power grid, so that the electrical energy flows between the power grid and the electric vehicle.

Optionally, under control of the controller 160, the bidirectional alternating current module 130 may feed power to the power grid when a load of the power grid is relatively large; and obtain electrical energy from the power grid to charge the battery pack 150 when the load of the power grid is relatively small, so that intelligent scheduling is implemented by using the controller.

In an actual scenario, the power grid may generally provide an alternating current with a power frequency of 50 Hz (hertz, Hz) and a voltage of 220 V When a load of the power grid changes, a power frequency and a voltage may change. Therefore, a current load status of the power grid may be determined by monitoring a change in the power frequency and the voltage. When the power frequency is less than 50 Hz or the voltage is greater than 220 V, the power grid is overloaded (with a larger load). When the power frequency is greater than 50 Hz or the voltage is less than 220 V, the power grid is lightly loaded (with a smaller load).

Optionally, the bidirectional alternating current module 130 and the low-voltage direct current module 120 may be integrated together, for example, may be implemented through a three-port converter. For example, a circuit for implementing a function of the bidirectional alternating current module and a circuit for implementing a function of the low-voltage direct current module may be integrated together through a three-port converter to form a bidirectional alternating current and low-voltage direct current integration module. The three-port converter includes one primary winding and two secondary windings, the primary winding is connected to the input end, one of the two secondary windings is connected to the circuit that is for implementing the function of the bidirectional alternating current module and that is in the integration module, and the other of the two secondary windings is connected to the circuit that is for implementing the function of the low-voltage direct current module and that is in the integration module.

The industrial electrical power module 140 may convert the electrical energy in the battery pack 150 into industrial electrical power for output, or may convert obtained industrial electrical power into the electrical energy in the battery pack 150. During power supply, the electrical energy in the battery pack 150 flows into the industrial electrical power module 140 through the input interface connected to an input end. The industrial electrical power module 140 converts the electrical energy into industrial electrical power, and outputs the industrial electrical power from an output interface (for example, the output interface #4 shown in FIG. 1) corresponding to an output end. During charging, the industrial electrical power flows into the battery pack 150 through the output interface (for example, the output interface #4 shown in FIG. 1) corresponding to the output end of the industrial electrical power module 140. The industrial electrical power module 140 converts the electrical energy into stored direct current electrical energy, and flows the direct current electrical energy into the battery pack 150 through the input interface connected to the input end.

The common industrial electrical power is a three-phase AC, with an equivalent voltage of 380 V, which is suitable for fast charging of electric vehicles.

Optionally, the power converter 100 may further include the motor driver module. The motor driver module may convert the electrical energy in the battery pack 150 into corresponding motor kinetic energy according to a motor driver current requirement. In other words, during power supply, the electrical energy in the battery pack 150 may flow in from an input end of the motor driver module connected to the input interface. The motor driver module converts the flowed electrical energy into an alternating current that can support the motor to work, and outputs the alternating current to the motor through an output interface corresponding to an output end, to drive the motor to run.

It should be noted that, in some cases, the motor driver module may be independent. In this case, the power converter includes a module, and the module may be used to generate the electrical energy for driving the motor. In some other cases, the motor driver module may alternatively be an example of the industrial electrical power module 140 during power supply. That is, when supplying power, the industrial electrical power module 140 may be configured to provide the electrical energy for the motor. In this case, the industrial electrical power module 140 provides a function of the motor driver module. In short, the motor driver module may be used as an independent power supply module, or may be used as a sub-module of the industrial electrical power module 140. During power supply, the industrial electrical power module 140 may provide electrical energy for a motor driver apparatus of a vehicle in which the industrial electrical power module is located, or may charge another vehicle. However, during charging, the industrial electrical power module 140 obtains industrial electrical power in another way. Therefore, it can be clearly learned that the power supply and the charging are independent of each other.

It should be further understood that, when the motor driver module is an independent module, a function of the industrial electrical power module 140 is not affected, and the industrial electrical power module 140 may still perform both charging and power supply, but the motor driver module may only perform power supply. In other words, the independent motor driver module can only be configured to provide the electrical energy for driving the motor to run, and cannot be configured to charge the battery pack.

The power converter provided in embodiments of this application can have functions of various power modules, and can provide or obtain various types of electrical energy, thereby extending a wider application scope, and facilitating charging and power supply.

In addition, the input interface is shared, which simplifies a cable connection and reduces a quantity of cables. The input interface and the output interface may be interchanged, so that both a power supply function and a charging function may be provided.

To resolve a technical problem in the prior art that an application scope of a power converter is excessively narrow, a possible solution is that a plurality of types of power converters may be installed on a same electric vehicle. However, such a plurality of independent power converters cause difficulty in vehicle layout, a relatively large quantity of cables and disorder, and relatively high accumulated costs. However, in addition to extending a wider application scope than an independent power converter in the prior art, the power converter provided in this embodiment of this application further avoids problems such as difficulty in vehicle layout and a relatively large quantity of cables and disorder in the assumed solution, and facilitates the use.

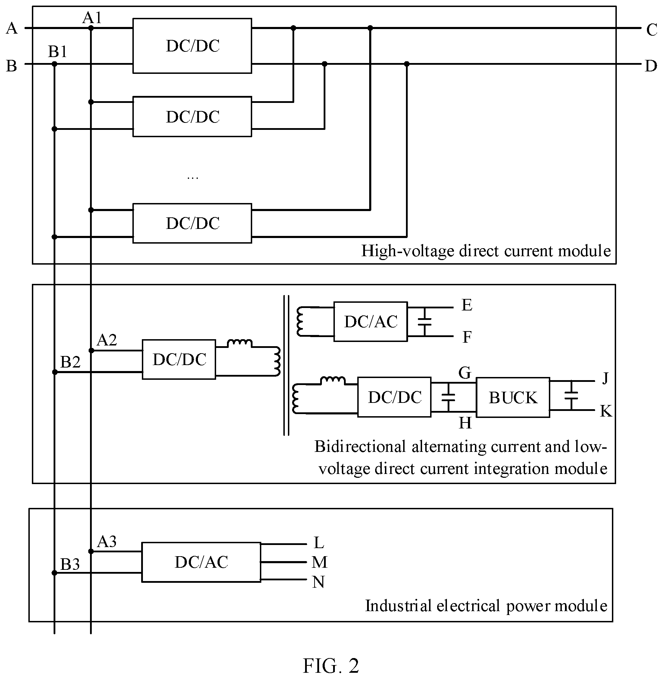

FIG. 2 is a schematic connection diagram of an internal module of a power converter according to an embodiment of this application. As shown in FIG. 2, A and B respectively indicate two ends of an input interface. In other words, the two ends A and B are respectively connected to two electrodes (a cathode and an anode) of a battery pack. An input end A1B1 of a high-voltage direct current module, an input end A2B2 of a bidirectional alternating current and low-voltage direct current integration module, and an input end A3B3 of an industrial electrical power module/motor driver module are correspondingly connected, as shown in FIG. 2.

In the high-voltage direct current module, a plurality of isolated DC/DC converters are connected in a cascading manner between an electrical path A1C and an electrical path B 1D. CD is an output end of the high-voltage direct current module. In an example, a voltage range at the input end A1B1 may be 200 V to 500 V, and a voltage range at the output end CD may be 200 V to 1000 V However, it should be understood that in this application, the voltage range at the input end is determined by the battery pack, that is, depends on a voltage range of the battery pack in an electric vehicle. Therefore, the foregoing example is not unique, and the voltage range at the output end is jointly determined by the voltage range at the input end and the plurality of isolated DC/DC converters. In addition, in this embodiment of this application, a voltage at the input end of the high-voltage direct current module may be greater than, equal to, or less than a voltage at the output end, and is not limited thereto.

As described above, the high-voltage direct current module includes the plurality of isolated direct current/direct current converters, and the plurality of isolated direct current/direct current converters are connected in a cascading manner. The input end (that is, the A1B1 end on a left side in FIG. 2) of the high-voltage direct current module is connected to the input interface AB, the output end (that is, the CD end on a right side in FIG. 2) of the high-voltage direct current module is connected to any one of a plurality of output interfaces of the power converter, and the plurality of isolated direct current/direct current converters are cascaded between the input end and the output end (that is, inside the high-voltage direct current module).

A magnitude or power of a current output by the output end may be controlled by controlling a quantity of isolated DC/DC converters that have been enabled. In other words, the quantity of isolated DC/DC converters that are powered on (in a working state) in a same time corresponds to the voltage value output by the output end of the high-voltage direct current module. For example, when a load is small, a single isolated DC/DC converter may be enabled; and when the load is increased, the quantity of isolated DC/DC converters is increased appropriately. Specifically, how to increase or decrease the quantity of enabled isolated DC/DC converters may be controlled by a controller. In other words, a corresponding algorithm may be set in the controller, so that the controller may determine, according to a situation, the quantity of isolated DC/DC converters that need to be enabled, and indicate working of the high-voltage direct current module. In other words, the high-voltage direct current module may enable one or more isolated DC/DC converters according to indication information of the controller, to adapt to a change in the load. However, it should be understood that there is no limitation on which one or more isolated DC/DC converters are specifically enabled, that is, there is no limitation on a selection sequence.

The bidirectional alternating current module and the low-voltage direct current module in FIG. 2 are integrated together, and may be referred to as the bidirectional alternating current and low-voltage direct current integration module. The input end of the integration module is A2B2, and there are three output ends of the integration module: an EF end, a GH end, and a JK end, where the EF end is an output end for a bidirectional alternating current part, both the GH end and the JK end are output ends for a low-voltage direct current part, the GH end outputs a 48 V direct current, and the JK end outputs a 12 V direct current. The integration module includes one DC/AC converter and two DC/DC converters, and may be referred to as a three-port converter. The bidirectional alternating current module and the low-voltage direct current module may be considered as being integrated through the three-port converter. A transformer of the three-port converter includes one primary winding, two secondary windings, and a magnetic core. As shown in FIG. 2, two narrow vertical lines in parallel in the middle indicate the magnetic core of the transformer. A coil on a left side of the magnetic core is the primary winding, and two coils on a right side of the magnetic core are two secondary windings. The primary winding is connected to the input end A1B1 through the DC/DC converter, and the two secondary windings are respectively connected to the DC/AC converter and the DC/DC converter.

The DC/AC converter may convert a direct current into an alternating current, and the AC/DC converter may convert an alternating current into a direct current. Therefore, in FIG. 2, a direct current input from the AB end is first converted into a direct current whose voltage changes, and is generally a direct current whose voltage steps down. For example, assuming that the battery pack outputs a direct current voltage of 200 V to 500 V, voltage step-down may be performed once to convert a direct current into a direct current whose voltage steps down, then the converted direct current is divided into two paths, the two paths are respectively converted into an alternating current and a direct current of another voltage, and finally, the alternating current and the direct current of another voltage are output. As shown in FIG. 2, an alternating current is output from the DC/AC converter, and ends of the output interface of the alternating current are indicated by EF in the figure. A direct current is output from the DC/DC converter on the right side, and ends of the output interface of the direct current are indicated by GH in the figure. A direct current buck circuit may be further connected after the GH end, to obtain a direct current with a lower voltage, for example, a direct current output from the JK end in FIG. 2.

Optionally, the low-voltage direct current part of the integration module may further include a low-voltage direct current buck circuit, for example, a buck circuit. The buck circuit may convert a low-voltage direct current into a direct current with a lower voltage.

For example, a 220 V alternating current may be output from the EF end, a 48 V direct current may be output from the GH end, and a 12 V direct current may be output from the JK end. For another example, a 24 V direct current may alternatively be output from the GH end. For another example, a 5 V direct current may be output from the JK end. That is, both the GH end and the JK end may be set to output different types of low-voltage direct currents, including common low-voltage direct currents such as 48 V, 24 V, 12 V, and 5 V A voltage value output at the GH end is higher than a voltage value output at the JK end.

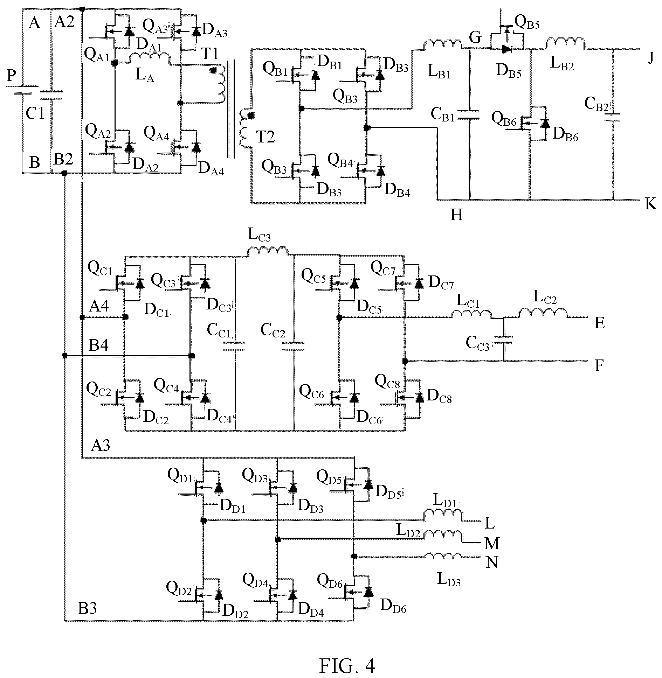

It should be understood that, although FIG. 2 shows the bidirectional alternating current and low-voltage direct current integration module, it does not mean that the modules cannot be independent of each other. In actual circuit implementation, each power module may be made to be independent, and finally, the power modules are integrated through respective ports, or some modules may be integrated again. FIG. 2 is an example of an integration module in which some modules are integrated. For another example, FIG. 4 shows an example in which a bidirectional alternating current module, a low-voltage direct current module, and an industrial electrical power module are independent of each other.

Optionally, to make each module work stably, a PI-type filter may be further added before each module to resolve a problem of electromagnetic compatibility. It may be understood that some appropriate electromagnetic compatibility (electromagnetic compatibility, EMC) protection circuits may be added.

The industrial electrical power module in FIG. 2 includes a DC/AC converter. The DC/AC converter may be configured to convert a direct current input from the A3B3 end into an alternating current. During power supply, the industrial electrical power module may convert electrical energy in the battery pack into a 380 V three-phase alternating current. For example, during power supply, the industrial electrical power module may be used as a motor driver module, to convert the electrical energy in the battery pack into an alternating current for the motor to work. For another example, during power supply, the industrial electrical power module may further charge another vehicle. During charging, it may be considered that the output end and the input end are exchanged, and fast charging is performed on the battery pack through the AB end. That is, a 380 V alternating current may be input from an LMN end, converted into a direct current through the DC/AC converter in a reverse direction, and then output to the battery pack through the A3B3 end and the AB end.

It should be understood that, in this embodiment of this application, various types of converters may work bidirectionally, for example, the DC/DC converter and the DC/AC converter described above.

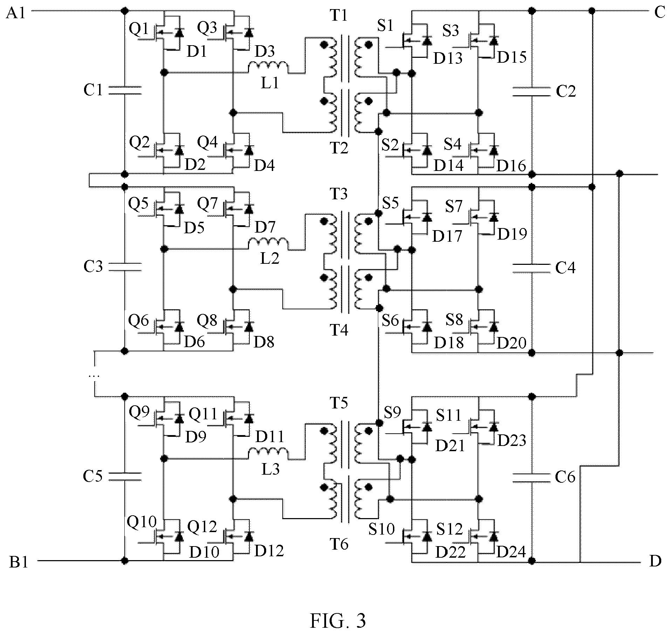

FIG. 3 is a schematic circuit diagram of a high-voltage direct current module according to an embodiment of this application. As shown in FIG. 3, an A1B 1 end on a left side may respectively correspond to the input end A1B1 in FIG. 2, and a CD end on a right side may respectively correspond to the output end CD of the high-voltage direct current module in FIG. 2. For ease of description, the following first explains symbols of electronic components in FIG. 3. Q1 to Q12 and S1 to S12 in FIG. 3 are all metal-oxide-semiconductor (metal oxide semiconductor, MOS) transistors, which are also referred to as metal-oxide-semiconductor field-effect transistors, and are referred to as MOS transistors for short below. C1 to C6 in FIG. 3 are all capacitors, D1 to D24 in FIG. 3 are all diodes, L1 to L3 in FIG. 3 are all inductors, and T1 and T2 in FIG. 3 are both transformers. It should be noted that symbols of components in FIG. 4 are also indicated in a manner similar to that in FIG. 3.

As shown in FIG. 3, a plurality of isolated DC/DC converters are cascaded between the input end AB and the output end CD. One of the isolated DC/DC converters is used as an example. As shown in FIG. 3, Q1 to Q4 and D1 to D4 and the connection manner shown in the figure form a dual active full-bridge circuit, S1 to S4 and the connection manner shown in the figure form a phase-shifted full-bridge circuit, and L1 and C1 form a resonant circuit.

C1 and C2, Q1 to Q4, D1 to D4, L1, T1 and T2, S1 to S4, and D13 to D16 in FIG. 3 show an example circuit of a single DC/DC converter. A diode is connected in parallel between a drain D and a source S of each of the four MOS transistors of Q1 to Q4. For example, a drain D of Q1 is electrically connected to a cathode of D1, and a source S of Q1 is electrically connected to an anode 1 of D1. A same connection manner is used between Q2 and D2, between Q3 and D3, and between Q4 and D4. Repeated descriptions are not provided. Q1 to Q4 and D1 to D4 jointly form the dual active full-bridge circuit, and a capacitor C1 is connected in parallel before the dual active bridge circuit. For a specific connection manner, refer to FIG. 3. One end of L1 is electrically connected to the source S of Q1 and a drain D of Q2, and the other end of L1 is connected to a first electrode of a primary winding of T1. A first electrode of T2 is co-polar with the first electrode of T1. A second electrode of the primary winding of T1 is connected to a first electrode of a primary winding of T2, and a second electrode of T2 is electrically connected to a source S of Q3 and a drain D of Q4. A drain D of Q1 is electrically connected to a drain D of Q3, and a source S of Q2 is electrically connected to a source S of Q4. One end of C1 is connected to the drain D of Q1 and the drain D of Q3, and the other end of C1 is connected to the source S of Q2 and the source S of Q4. A first electrode of a secondary winding of T1 is electrically connected to a source S of S1, a drain D of S2, and a first electrode of a secondary winding of T2. A second electrode of the secondary winding of T1 is electrically connected to a second electrode of the secondary winding of T2, a source S of S3, and a drain D of S4. A drain D of S1 is connected to a cathode of D13, a source S of S1 is electrically connected to an anode of D13, and connection manners between S2 and D14, between S3 and D15, and between S4 and D16 are the same as that between S1 and D13. Repeated descriptions are not provided. One end of C2 is connected to the drains D of S1 and S3, and an interface C of the output end is connected. The other end of C2 is electrically connected to the sources S of S2 and S4, and is connected to an interface D of the output end. The output end CD may correspond to the output end CD shown in FIG. 2, that is, the output end of the high-voltage direct current module.

The other end of C1 is connected to one end of a capacitor in another DC/DC converter. As shown in FIG. 3, C1, C3, ..., and C5 may be connected according to a head-to-tail rule. C2, C4, ..., and C6 may be connected according to a head-to-head rule or a tail-to-tail rule, where the head C2 is connected to C, and the tail C6 is connected to D. In this way, a cascading structure of the plurality of DC/DC converters is formed.

For a circuit structure of another DC/DC converter, a structure that is the same as or similar to that of the single DC/DC converter described above may be used. Therefore, repeated descriptions are not provided.

It should be noted that, turn ratios of the primary winding and the secondary winding that are of the transformer may be set to the same (that is, the turn ratio is 1:1) or may be set to different (that is, the turn ratio is not 1:1), and a voltage change in the set turn ratio can be clearly calculated. However, if the turn ratio is set to 1:1, that is, the primary winding and the secondary windings are symmetrically arranged, consistency of transformer manufacturing is better ensured, and calculation is easy to be performed.

During operation, output power may be controlled by controlling a quantity of working DC/DC converters.

It should be understood that FIG. 3 shows only an example of a circuit of the high-voltage direct current module. A person skilled in the art may obtain an alternative solution to the foregoing circuit without creative efforts. For example, any dual active full-bridge circuit may be used in the DC/DC converter in this embodiment of this application. In addition, the circuit shown in FIG. 4 below also has a full-bridge structure similar to that of the circuit shown in FIG. 3, which is properly omitted without affecting integrity of the solution.

FIG. 4 is a schematic circuit diagram of a part of a power module according to an embodiment of this application. For ease of description, circuit modules in FIG. 4 are divided, and different modules are indicated by using different subscripts. FIG. 4 mainly shows a circuit structural diagram of another power module except a high-voltage direct current module. P on a left side of FIG. 4 indicates a battery pack, and an output end of the battery pack is electrically connected to an AB end of a power converter. To facilitate distinguishing of each module, input ends of modules are respectively named A2B2, A3B3, and A4B4. C1 is used to indicate a capacitor. A common processing manner of power supply introduction is performing filtering before the power supply is introduced into the circuit module.

The A2B2 end on a left side in FIG. 4 may correspond to the input end A2B2 described above, for example, A2B2 shown in FIG. 2. Q_{A1} to Q_{A4}, D_{A1} to D_{A4}, L_{A}, and T1 in FIG. 4 show an example circuit on a secondary winding of a transformer of a low-voltage direct current/direct current converter. In the figure, all electronic components in this part are indicated by using subscripts with "A". Q_{A1} to Q_{A4} indicate MOS transistors, D_{A1} to D_{A4} indicate diodes, L_{A} indicates an inductor, T1 indicates a primary winding of the transformer, and T2 is a secondary winding. A diode is connected in parallel between a drain D and a source S of each MOS transistor. For example, a drain D of Q_{A1} is electrically connected to a cathode of D_{A1}, and a source S of Q_{A1} is electrically connected to an anode of D_{A1}. A same connection manner is used between Q_{A2} and D_{A2}, between Q_{A3} and D_{A3}, and between Q_{A4} and D_{A4}. Repeated descriptions are not provided. Q_{A1} to Q_{A4} and D_{A1} to D_{A4} jointly form a dual active full-bridge circuit, and are connected in parallel to a capacitor C1 before the dual active bridge circuit. For a specific connection manner, refer to FIG. 4. Details are not described again. One end of L_{A} is electrically connected to the source S of Q_{A1} and a drain D of Q_{A2}, the other end of L_{A} is electrically connected to a first electrode of T1, and a second electrode of T1 is electrically connected to a source S of Q_{A3} and a drain D of Q_{A4}.

It should be understood that, in FIG. 3 and FIG. 4, a MOS transistor is mainly used. However, in practice, a triode may be used to replace the MOS transistor, but the solution of this application can still be implemented. In other words, that the MOS transistor is replaced with a triode such as an NPN transistor or a PNP transistor is also applicable to the full-bridge circuit in this embodiment of this application.

Optionally, each MOS transistor may also be connected in parallel to a capacitor, that is, two electrodes of each MOS transistor are respectively connected in parallel to a diode and a capacitor. This structure is also applicable to the full-bridge circuit in this embodiment of this application.

L_{B1}, L_{B2}, Q_{B1} to Q_{B6}, D_{B1} to D_{B6}, C_{B1} and C_{B2}, and T2 in FIG. 4 show an example circuit on a secondary winding of a low-voltage direct current module. In the figure, all electronic components in this part are indicated by using subscripts with "B". In FIG. 4, a circuit formed by both an electronic component with a subscript "A" and an electronic component with a subscript "B" is an example of a low-voltage direct current module. C_{B1} and C_{B2} indicate capacitors, Q_{B1} to Q_{B6} indicate MOS transistors, D_{B1} to D_{B6} indicate diodes, and L_{B1} and L_{B2} indicate inductors. A diode is connected in parallel between a drain D and a source S of each of the four MOS transistors of Q_{B1} to Q_{B4}. For example, a drain D of Q_{B1} is electrically connected to a cathode of D_{B1}, and a source S of the Q_{B1} is electrically connected to an anode of D_{B1}. A same connection manner is used between Q_{B2} and D_{B2}, between Q_{B3} and D_{B3}, and between Q_{B4} and D_{B4}. Repeated descriptions are not provided. Q_{B1} to Q_{B4} and D_{B1} to D_{B4} jointly form a dual active full-bridge circuit, and an inductor L_{B1} is connected in series and a capacitor C_{B5} is connected in parallel after the dual active bridge circuit. For a specific connection manner, refer to FIG. 4. One end of L_{B1} is electrically connected to the source S of Q_{B1} and a drain D of Q_{B2}, and the other end of L_{B1} is electrically connected to one end of C_{B1}. A first electrode of T2 is electrically connected to drains of both Q_{B1} and Q_{B3}, and a second electrode of T2 is electrically connected to sources S of both Q_{B2} and Q_{B4}. The first electrode of T2 is co-polar with a first electrode of T1. One end of C_{B1} is connected to the other end of L_{B1}, and the other end of C_{B5} is connected to a source S of Q_{B3} and a drain D of Q_{B4}. Output interfaces G and H are respectively connected from two ends of C_{B1}, and the output end GH may correspond to the interface GH in FIG. 2, that is, an output end of a low-voltage direct current with a relatively high voltage of the low-voltage direct current module, for example, may be a direct current that outputs 48 V

L_{B2}, Q_{B5}, Q_{B6}, D_{B5}, D_{B6} and C_{B2} in FIG. 4 show an example circuit of a low-voltage direct current buck module. C_{B2} indicates a capacitor, Q_{B5} and Q_{B6} indicate MOS transistors, D_{B5} and D_{B6} indicate diodes, and L_{B2} indicates an inductor. A drain D of Q_{B5} is electrically connected to a cathode of D_{B5}, and a source S of Q_{B5} is electrically connected to an anode of D_{B5}. A drain D of Q_{B6} is electrically connected to a cathode of D_{B6}, and a source S of Q_{B6} is electrically connected to an anode of D_{B6}. One end of L_{B2} is electrically connected to the drain D of Q_{B5} and the source S of Q_{B6}, and the other end of L_{B2} is connected to one end of C_{B2}, and an output interface J is connected. The other end of C_{B2} is electrically connected to the source S of Q_{B5}, and an output interface K is connected. The output end JK may correspond to the interface JK in FIG. 2, that is, an output end with a relatively low-voltage direct current in the low-voltage direct current module, for example, may output a voltage such as 12 V or 5 V

It should be understood that, in an actual circuit design process, output voltages of the GH end and the JK end may include common low-voltage direct currents such as 48 V, 24 V, 12 V, and 5 V, and a relatively high low-voltage direct current at the GH end may be converted into a relatively low-voltage direct current through the low-voltage buck circuit.

L_{C1} to L_{C3}, Q_{C1} to Qcs, D_{C1} to D_{C8}, and C_{C1} to C_{C3} in FIG. 4 show an example circuit of a bidirectional alternating current module. In the figure, all electronic components in the bidirectional alternating current module are indicated by using subscripts with "C". C_{C1} to C_{C3} indicate capacitors, Q_{C1} to Qcs indicate MOS transistors, D_{C1} to Dcs indicate diodes, and L_{C} indicates inductors. A diode is connected in parallel between a drain D and a source S of each of the eight MOS transistors of Q_{C1} to Qcs. For example, a drain D of Q_{C1} is electrically connected to a cathode of D_{C1}, and a source S of Q_{C1} is electrically connected to an anode of D_{C1}. A same connection manner is used between Q_{C2} and D_{C2}, between Q_{C3} and D_{C3}, and between Q_{C4} and D_{C4}. Repeated descriptions are not provided. Q_{C1} to Q_{C4} and D_{C1} to D_{C4} jointly form a dual active full-bridge circuit. A capacitor C_{C1}, Q_{C5} to Q_{C8}, and D_{C5} to D_{C8} are connected in parallel after a dual active full-bridge circuit to form the dual active full-bridge circuit, and a capacitor C_{C2} is connected in parallel before the dual active full-bridge circuit. For a specific connection manner, refer to FIG. 4. One end of L_{C3} is electrically connected to the drain D of Q_{C1}, a drain D of Q_{C2}, and one end of C_{C1}, and the other end of L_{C3} is electrically connected to a drain D of Q_{C5}, one end of C_{C2}, and a drain D of Q_{C4}. The other end of C_{C1} is electrically connected to a source S of Q_{C2}, a source S of Q_{C4}, and the other end of C_{C2}. The drain D of Q_{C1} is electrically connected to a drain D of Q_{C3}, and the source S of Q_{C2} is electrically connected to the source S of Q_{C4}. One end of L_{C1} is electrically connected to a source S of Q_{C5} and a drain D of Q_{C6}, and the other end of L_{C1} is electrically connected to one end of L_{C2} and one end of C_{C3}. The other end of C_{C3} is electrically connected to a source S of Q_{C7} and a drain D of Q_{C8}, and an output end F is connected. An output end E is connected from the other end of L_{C2}, and the output end EF may correspond to the interface EF in FIG. 2, that is, the output end of the bidirectional alternating current module, and may flow through, for example, a 220 V alternating current.

Q_{D1} to Q_{D6}, D_{D1} to D_{D6}, and L_{D1} to L_{D3} in FIG. 4 show an example circuit of a 380 V alternating current module. In the figure, all electronic components in the 380 V alternating current module are indicated by using subscripts with "D". Q_{D1} to Q_{D6} indicate MOS transistors, D_{D1} to D_{D6} indicate diodes, and L_{D1} and L_{D2} indicate inductors. A diode and a capacitor are connected in parallel between a drain D and a source S of each of the six MOS transistors of Q_{D1} to Q_{D6}. For example, a drain D of Q_{D1} is electrically connected to a cathode of D_{D1}, a source S of Q_{D1} is electrically connected to an anode of D_{D1}. A same connection manner is used between Q_{D2} and D_{D2}, between Q_{D3} and D_{D3}, between Q_{D4} and D_{D4}, between Q_{D5} and D_{D5}, and between Q_{D6} and D_{D6}. Repeated descriptions are not provided. Q_{D1} to Q_{D6} and D_{D1} to D_{D6} jointly form a three-phase full-bridge circuit. For a specific connection manner, refer to FIG. 4. The drain D of Q_{D1}, a drain D of Q_{D3}, and a drain D of Q_{D5} are electrically connected, a source S of Q_{D2}, a source S of Q_{D4}, and a source S of Q_{D6} are electrically connected, the source S of Q_{D1} is electrically connected to a drain D of Q_{D2}, a source S of Q_{D3} is electrically connected to a drain D of Q_{D4}, and a source S of Q_{D5} is electrically connected to a drain D of Q_{D6}. One end of L_{D1} is connected to the source S of Q_{D1} and the drain D of Q_{D2}, and an interface L of the output end is connected from the other end of L_{D1}. One end of L_{D2} is connected to the source S of Q_{D3} and the drain D of Q_{D4}, and an interface M of the output end is connected from the other end of L_{D2}. One end of L_{D3} is connected to the source S of Q_{D5} and the drain D of Q_{D6}, and the interface L of the output end is connected from the other end of L_{D3}. An output end LMN may correspond to the interface LMN in FIG. 2, that is, the output end of the industrial electrical power module.

It should be understood that FIG. 4 is merely an example of a circuit in this embodiment of this application, and a person skilled in the art may further obtain another alternative solution with a same or similar function based on this. Details are not described herein.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A power converter, comprising one input interface, a plurality of power modules, and a plurality of output, wherein the plurality of power modules comprise: a high-voltage direct current module, a low-voltage direct current module, a bidirectional alternating current module, and an industrial electrical power module;
input of the plurality of power modules are all electrically connected to the input interface, and the input interface is electrically connected to a battery pack of a vehicle; and
output ends of the plurality of power modules are independent of each other, the output ends of the plurality of power modules are electrically connected to the plurality of output interfaces in a one-to-one correspondence, and the output interfaces are electrically connected to a power device or a charging device other than the vehicle.

2. The power converter according to claim 1, wherein the input interface supports a direct current with an input voltage ranging from 200 volts V to 500 V

3. The power converter according to claim 1, wherein an output interface corresponding to an output end of the high-voltage direct current module supports a direct current with an output voltage ranging from 200 V to 1000 V

4. The power converter according to claim 1, wherein an output interface corresponding to an output end of the low-voltage direct current module supports an output of at least one type of the following electrical energy: a 48 V direct current and a 12 V direct current.

5. The power converter according to claim 4, wherein the low-voltage direct current module further comprises a low-voltage buck circuit, and the 12 V direct current is obtained by using the low-voltage direct current buck circuit to perform voltage step-down on a 48 V voltage.

6. The power converter according to any one of claims 1 to 5, wherein an output interface corresponding to an output end of the bidirectional alternating current module supports an output of a 220 V alternating current.

7. The power converter according to any one of claims 1 to 5, wherein an output interface corresponding to an output end of the industrial electrical power module supports an output of a 380 V alternating current.

8. The power converter according to any one of claims 1 to 5, wherein an output interface corresponding to an output end of the industrial electrical power module supports an output of an alternating current used to drive a motor to run.

9. The power converter according to any one of claims 1 to 5, wherein the power converter further comprises a motor driver module, and an output interface corresponding to an output end of the motor driver module supports an output of an alternating current used to drive a motor to run.

10. The power converter according to any one of claims 1 to 5, wherein the high-voltage direct current module comprises a plurality of isolated direct current/direct current DC/DC converters, the plurality of isolated DC/DC converters are connected in a cascading manner between an input end of the high-voltage direct current module and the output end of the high-voltage direct current module, and a quantity of isolated DC/DC converters powered on in a same time corresponds to a voltage value output or input by the output end of the high-voltage direct current module.

11. The power converter according to claim 10, wherein a quantity of coil turns of a primary winding and a quantity of coil turns of a secondary winding that are of a transformer in the plurality of isolated DC/DC converters are equal.

12. The power converter according to any one of claims 1 to 5, wherein a circuit for implementing a function of the bidirectional alternating current module and a circuit for implementing a function of the low-voltage direct current module are integrated together through a three-port converter to form a bidirectional alternating current and low-voltage direct current integration module, the three-port converter comprises one primary winding and two secondary windings, the primary winding is connected to the input end, one of the two secondary windings is connected to the circuit that is for implementing the function of the bidirectional alternating current module and that is in the integration module, and the other of the two secondary windings is connected to the circuit that is for implementing the function of the low-voltage direct current module and that is in the integration module.

13. The power converter according to any one of claims 1 to 5, wherein that the output interfaces are electrically connected to a power device or a charging device other than the vehicle comprises:
any one or more of the plurality of output interfaces are electrically connected to the charging device; or
any one of the output interface corresponding to the output end of the high-voltage direct current module, the output interface corresponding to the output end of the bidirectional alternating current module, or the output interface corresponding to the output end of the industrial electrical power module is electrically connected to the charging device.
